Europäisches Patentamt

European Patent Office

Office européen des brevets

(11) Veröffentlichungsnummer: **0 189 906**
**B1**

(12) **EUROPÄISCHE PATENTSCHRIFT**

(45) Veröffentlichungstag der Patentschrift:
**11.05.88**

(51) Int. Cl.⁴: **B 29 C 45/27**, B 29 C 45/37

(21) Anmeldenummer: **86101130.2**

(22) Anmeldetag: **29.01.86**

(54) **Werkzeug zum Spritzgiessen von stapelbaren Behältern.**

(30) Priorität: **30.01.85 DE 3503006**

(43) Veröffentlichungstag der Anmeldung:
**06.08.86 Patentblatt 86/32**

(45) Bekanntmachung des Hinweises auf die Patenterteilung:
**11.05.88 Patentblatt 88/19**

(84) Benannte Vertragsstaaten:
**AT BE CH DE FR GB IT LI LU NL SE**

(56) Entgegenhaltungen:
GB - A - 1 281 969
GB - A - 2 044 666

(73) Patentinhaber: **Friedrich Theysohn GmbH,
John-F.-Kennedy-Strasse 48, D-3320 Salzgitter 1 (DE)**

(72) Erfinder: **Glenapp, Horst, Weserweg 6,
D-3012 Langenhagen (DE)**

(74) Vertreter: **Döring, Roger, Dipl.-Ing., Kabelkamp 20,
D-3000 Hannover 1 (DE)**

**Beschreibung**

Die Erfindung bezieht sich auf ein Werkzeug zum Spritzgiessen von stapelbaren Behältern aus Kunststoff mit mindestens einer mehrwandigen Wandung, deren Teilwände mindestens einen Hohlraum begrenzen, bestehend aus einem Kern und einer Aussenform, die relativ zueinander bewegbar sind und in geschlossener Position Hohlräume zur Aufnahme von Spritzmaterial einschliessen, mit welchem das Spritzmaterial über Angusskänale an unterschiedlichen Stellen in die Hohlräume eingespritzt wird, wobei mindestens für die äussere Teilwand der mehrwandigen Wandung mindestens ein Angusskanal vorgesehen ist. Ein solches Werkzeug geht aus der EP-PS 0 019 336 hervor.

Die mit diesem Werkzeug herstellbaren Behälter können beispielsweise kastenförmig sein, mit rechteckigem oder quadratischem Querschnitt. Sie können aber auch kreisförmig oder oval ausgeführt sein. In Gebrauchslage sind die Behälter oben offen. Sie werden beispielsweise als Transportbehälter für Flaschen, Dosen, Tüten, Granulate, Pulver oder Flüssigkeiten verwendet. «Mehrwandig» bedeutet, dass die entsprechende Wandung mindestens zwei Teilwände aufweist, also doppelwandig ausgebildet ist. Es können aber auch drei oder mehr Teilwände vorhanden sein. Die Behälter müssen einerseits stabil genug sein, um eine grössere Anzahl solcher Gegenstände oder auch schwerere Gegenstände aufnehmen zu können. Auf der anderen Seite sollen sie leicht sein, damit sie selbst zum Gesamtgewicht möglichst wenig beitragen. Es ist daher bekannt, solche Behälter nicht mit massiven Wandungen, sondern mehrwandig auszubilden, wobei zwischen den in der Regel durch Stege verbundenen Teilwänden Hohlräume eingeschlossen sind. Derartige Wandungen sind bei geringerem Materialaufwand mechanisch stabiler als einteilige Wände und die Behälter werden durch den Einschluss der Hohlräume insgesamt leichter.

Die aus Kunststoff bestehenden Behälter werden durch Spritzgiessen hergestellt. Ein dafür geeignetes Werkzeug geht aus der eingangs geschilderten EP-PS 0 019 336 hervor. Das Spritzmaterial wird bei diesem bekannten Werkzeug über eine Vielzahl von Angusskanälen in den Hohlraum des Werkzeugs eingespritzt. Die Angusskanäle sind bei diesem Werkzeug zum grössten Teil so angeordnet, dass die beim Entformen der Behälter an denselben verbleibenden stiftförmigen Angüsse nicht stören, da sie sich in Vertiefungen des Behälters befinden. Das gilt jedoch nicht für die an den äusseren Teilwänden verbleibenden Angüsse. Wenn diese sehr harten Angüsse an den Behältern belassen werden, sind die Behälter nicht mehr stapelbar. Es besteht dann auch die Gefahr, dass andere Gegenstände beim Bewegen der Behälter durch die abstehenden Angüsse beschädigt werden. Die Angüsse müssen also entweder mit grossem Aufwand nachträglich entfernt werden, beispielsweise durch Fräsen, oder es muss mit noch mehr Aufwand verhindert werden, dass solche Angüsse an den Behältern überhaupt entstehen. Das kann beispielsweise durch den Einsatz von Nadelverschlussdüsen geschehen, die pneumatisch oder hydraulisch gesteuert werden können.

Der Erfindung liegt die Aufgabe zugrunde, ein Werkzeug zum Spritzgiessen anzugeben, mit dem auf einfache Weise und insbesondere ohne den Einsatz von teuren Spezialdüsen störende Angüsse an den äusseren Teilwänden von mehrwandigen Behältern vermieden werden können.

Diese Aufgabe wird bei einem Werkzeug der eingangs geschilderten Art gemäss der Erfindung dadurch gelöst, dass der Angusskanal für die äussere Teilwand im Werkzeug so geführt ist, dass er an einer der beiden Seitenflächen des im Werkzeug für die äussere Teilwand vorgesehenen Hohlraums in denselben einmündet.

In diesem Werkzeug ist der Angusskanal für die äussere Teilwand so günstig geführt, dass er quer zur Bewegungsrichtung beim Entformen des fertigen Behälters verläuft. Der Anguss wird daher beim Entformen des Behälters von der äusseren Teilwand abgeschert, die damit angussfrei ist. Ein aufwendiges Nachbearbeiten ist nicht mehr erforderlich und teure Spezialdüsen werden nicht benötigt. Der im Angusskanal verbleibende Anguss stört beim nachfolgenden Spritzvorgang nicht, da er durch das mit erheblichem Druck in den Hohlraum des Werkzeugs eingespritzte Spritzmaterial aus dem Angusskanal herausgedrückt wird.

Ein Ausführungsbeispiel des Erfindungsgegenstandes ist in den Zeichnungen dargestellt.

Es zeigen:

Fig. 1 in schematischer Darstellung eine Ansicht eines mit dem Werkzeug nach der Erfindung herstellbaren Behälters.

Fig. 2 einen teilweisen Schnitt durch den Behälter in vergrösserter Darstellung.

Fig. 3 einen Ausschnitt aus einem Werkzeug nach der Erfindung.

Im dargestellten Ausführungsbeispiel ist ein doppelwandiger Kasten gezeigt. Dieser Kasten und seine Herstellung bzw. das entsprechende Werkzeug werden stellvertretend für alle geometrisch möglichen Behälter erläutert, die auch mehr als zwei Teilwände haben können. Die Wandungen bzw. Teilwände müssen auch nicht eben sein bzw. parallel zueinander verlaufen, sondern es können auch gewellte Teilwände am Behälter vorhanden sein. Die Hohlräume im Werkzeug müssen dann entsprechend gestaltet sein.

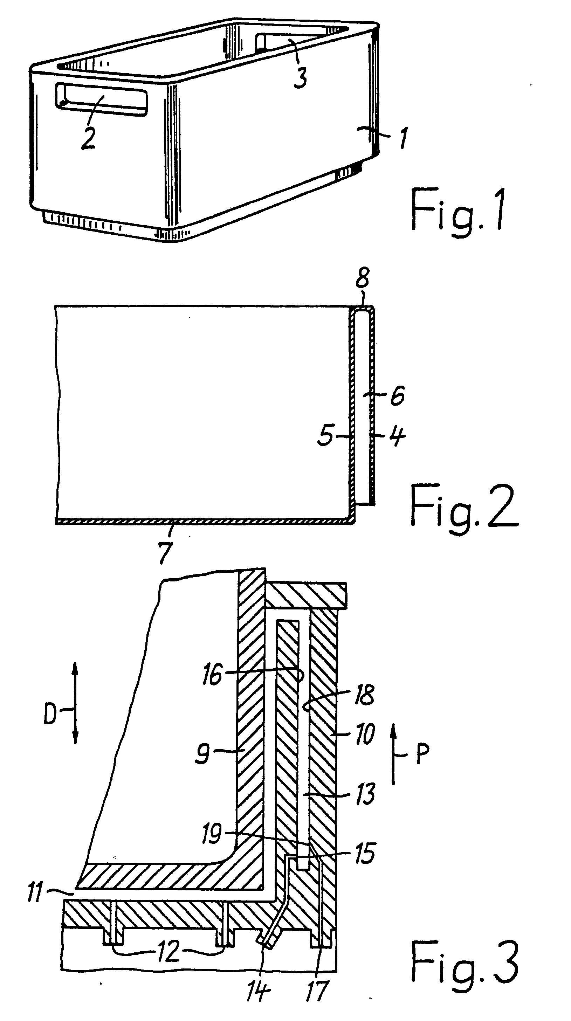

Mit 1 ist ein aus Kunststoff bestehender Behälter bezeichnet, bei welchem es sich beispielsweise um einen Flaschenkasten handelt. Der Behälter 1 ist mechanisch so stabil, dass eine grössere Anzahl von gefüllten Flaschen darin transportiert werden kann. Er kann in zwei einander gegenüber liegenden Wänden mit Durchbrechungen 2 und 3 versehen sein, welche als Griffmulden dienen. Mindestens eine der Wandungen des Behälters 1 besteht aus zwei Teilwänden 4 und 5 (Fig. 2), die parallel zueinander verlaufen und einen Hohlraum 6 begrenzen. Der Hohlraum 6 kann durch der Einfachheit halber nicht dargestellte Stege auch in zwei oder mehr Hohlräume unterteilt sein.

Die Teilwand 4 ist im dargestellten Ausführungsbeispiel kürzer als die Teilwand 5. Die Teilwand 5 geht an ihrem einen Ende in den Boden 7 des Behälters 1 über, während sie am anderen Ende 8 mit der Teilwand 4 verbunden ist, so dass diese Wandung des Behälters 1 im Querschnitt etwa U-förmig ausgeführt ist. Die Teilwand 4 liegt beim Behälter 1 aussen.

Zur Herstellung eines Behälters 1 wird ein Spritzgiess-Werkzeug verwendet, wie es ausschnittsweise in Fig. 3 dargestellt ist. Das Werkzeug besteht aus einem Kern 9 und einer Aussenform 10, die in Richtung des Doppelpfeiles D relativ zueinander bewegbar sind. Bei geschlossenem Werkzeug verbleiben zwischen Kern 9 und Aussenform 10 zusammenhängende Hohlräume 11, in welche zur Erzeugung eines Behälters 1 Spritzmaterial eingespritzt wird. Das Spritzmaterial wird dabei über Angusskanäle 12, die in der Aussenform 10 angebracht sind und in die Hohlräume 11 münden, in dieselben eingespritzt.

Der zur Erzeugung der äusseren Teilwand 4 im Werkzeug vorhandene Hohlraum 13, welcher insgesamt zu den Hohlräumen 11 gehört, hat mindestens einen eigenen Angusskanal 14. Im Gegensatz zu den Angusskanälen 12 mündet der Angusskanal 14 nicht in Richtung der durch den Pfeil P angedeuteten Entformungsrichtung, sondern quer dazu in den Hohlraum 13 ein. Das Ende 15 des Angusskanals 14 liegt dabei vorzugsweise in der inneren Seitenfläche 16 des Hohlraums 13, und zwar vorzugsweise in der Nähe des Endes dieses Hohlraums, das dem freien Ende der äusseren Teilwand 4 des herzustellenden Behälters 1 entspricht. Ausserdem wird der Angusskanal 14 zweckmässig so geführt, dass er rechtwinklig in den Hohlraum 13 einmündet.

Für die äussere Teilwand 4 kann auch ein Angusskanal 17 verwendet werden, der in der äusseren Seitenfläche 18 des Hohlraums 13 endet. Auch der Angusskanal 17 kann rechtwinklig in den Hohlraum 13 einmünden. Er kann jedoch auch — ebenso wie der Angusskanal 14 — so wie in Fig. 3 gezeigt, schräg in den Hohlraum 13 münden.

Die spezielle Führung der Angusskanäle 14 und 17 hat den Vorteil, dass beim Entformen eines gespritzten Behälters 1 der Anguss an den Enden 15 und 19 der Angusskanäle 14 und 17 von der äusseren Teilwand 4 abreisst und im Angusskanal bleibt. Die äussere Teilwand 4 ist daher nach dem Entformen des Behälters 1 ohne Nachbearbeitung frei von Angüssen. In bevorzugter Ausführungsform wird der Angusskanal 14 eingesetzt, da dann an der äusseren Oberfläche des Behälters 1 keine Abdrücke bzw. Dellen vorhanden sind, die durch das Abscheren des Angusses entstehen könnten.

### Patentansprüche

1. Werkzeug zum Spritzgiessen von stapelbaren Behältern aus Kunststoff mit mindestens einer mehrwandigen Wandung, deren Teilwände mindestens einen Hohlraum begrenzen, bestehend aus einem Kern (9) und einer Aussenform (10), die relativ zueinander bewegbar sind und in geschlossener Position Hohlräume (11, 13) zur Aufnahme von Spritzmaterial einschliessen, mit welchem das Spritzmaterial über Angusskanäle (12, 14, 15, 17) an unterschiedlichen Stellen in die Hohlräume eingespritzt wird, wobei mindestens für die äussere Teilwand der mehrwandigen Wandung mindestens ein Angusskanal (14, 17) vorgesehen ist, dadurch gekennzeichnet, dass der Angusskanal (14, 17) für die äussere Teilwand (4) im Werkzeug so geführt ist, dass er an einer der beiden Seitenflächen (16, 18) des im Werkzeug für die äussere Teilwand (4) vorgesehenen Hohlraums (13) in denselben einmündet.

2. Werkzeug nach Anspruch 1, dadurch gekennzeichnet, dass die mehrwandige Wandung zwei Teilwände (4, 5) aufweist.

3. Werkzeug nach Anspruch 1 oder 2, dadurch gekennzeichnet, dass der Angusskanal (14, 17) rechtwinklig in den Hohlraum (13) einmündet.

4. Werkzeug nach Anspruch 1 oder 2, dadurch gekennzeichnet, dass der Angusskanal (14, 17) schräg in den Hohlraum einmündet.

5. Werkzeug nach einem der Ansprüche 1 bis 4, dadurch gekennzeichnet, dass der Angusskanal (14, 17) in der Nähe des Endes des Hohraums (13) einmündet, das dem freien Ende der äusseren Teilwand (4) entspricht.

### Claims

1. A tool for the injection moulding of stackable containers of plastics material having at least one multi-sectioned wall, the component walls of which define at least one cavity, consisting of a core (9) and an outer mould (10) which are movable relatively to one another and, in the closed position, enclose cavities (11, 13) for the reception of material to be injected, the material to be injected being injected into the cavities at different points through sprue channels (12, 14, 15, 17), at least one sprue channel (14, 17) being provided at least for the outer component wall of the multi-sectioned wall, characterised in that the sprue channel (14, 17) for the outer component wall (4) is taken through the tool so that it opens into the cavity (13), provided in the tool for the outer component wall (4), at one of the two lateral faces (16, 18) of this cavity (13).

2. A tool according to claim 1, characterised in that the multi-sectioned wall comprises two component walls (4, 5).

3. A tool according to claim 1 or 2, characterised in that the sprue channel (14, 17) opens into the cavity (13) at right angles.

4. A tool according to claim 1 or 2, characterised in that the sprue channel (14, 17) opens into the cavity obliquely.

5. A tool according to any one of claims 1 to 4, characterised in that the sprue channel (14, 17) discharges in the vicinity of the end of the cavity (13) which corresponds to the free end of the outer component wall (4).

### Revendications

1. Outil pour le moulage par injection de récipients superposables en matière plastique comprenant au moins une paroi multiple dont les parties de paroi délimitent au moins une cavité, constitué par un noyau (9) et un moule (10) extérieur qui peuvent se déplacer l'un par rapport à l'autre et qui, en position de fermeture, délimitent des cavités (11, 13) destinées à recevoir la matériau injecté et dans lequel l'injection du matériau d'injection dans les cavités s'effectue par des conduits d'amenée (12, 14, 15, 17) aboutissant à différents emplacements, un conduit d'amenée (14, 17) au moins étant prévu pour au moins la partie de la paroi extérieure de la paroi multiple, caractérisé en ce que le conduit d'amenée (14, 17) pour la partie de paroi extérieure (4) suit dans l'outil un trajet tel qu'il débouche dans l'une des deux surfaces latérales (16, 18) de la cavité (13) prévue dans l'outil pour la partie de paroi extérieure (4).

2. Outil selon la revendication 1, caractérisé en ce que la paroi multiple présente deux parties de paroi (4, 5).

3. Outil selon l'une des revendications 1 ou 2, caractérisé en ce que le conduit d'amenée (14, 17) débouche à angle droit dans la cavité (13).

4. Outil selon l'une des revendications 1 ou 2, caractérisé en ce que le conduit d'amenée (14, 17) débouche obliquement dans la cavité.

5. Outil selon l'une des revendications 1 ou 4, caractérisé en ce que le canal d'amenée (14, 17) débouche à proximité de la cavité (13) qui correspond à l'extrémité libre de la partie de paroi extérieure (4).

0 189 906

Fig.1

Fig.2

Fig.3